# EUROPEAN PATENT APPLICATION

(11) **EP 3 306 538 A1**
(43) Date of publication of application: **11.04.2018**
(21) Application number: 17203868.9
(22) Date of filing: 22.01.2014
(51) Int. Cl.: G06Q 10/04, G06Q 10/06, G06Q 10/10

(54) **TOTAL-ORDERING IN PROCESS PLANNING**

(30) Priority: 04.02.2013 US 201313758409
(62) Divisional of application: 14152140.1
(71) Applicant: The Boeing Company, Chicago, IL 60606-1596 (US)
(72) Inventor: GROSE, David L., Chicago, IL Illinois 60606-2016 (US); SHERER, Thomas E., Chicago, IL Illinois 60606-2016 (US); BUTTON, Scott D., Chicago, IL Illinois 60606-2016 (US)
(74) Representative: Fraser, Karen

(57) **Abstract**

A method is provided that includes receiving process-related information describing a hierarchical process for production of a product. The process may include segments each of at least some of which include segment components. The method also includes determining an instance in which the segment components are total-ordered, which may include determining an instance in which the segments are total-ordered. For the total-ordered segments, the segment components may be partitioned by disjoint collections based upon earliest availability to produce earliest-available partitions, and separately based upon latest availability to produce latest-available partitions. Order flexibility may be identified for each segment component based upon membership in both earliest-available and latest-available partitions, and an instance in which each partition in both the earliest-available and latest-available partitions contains only one order-inflexible segment component may be determined. In this instance, the segment components may be total-ordered.

## Description

### TECHNOLOGICAL FIELD

The present disclosure relates generally to process planning and, in particular, to total-ordering for stochastic processing planning models.

### BACKGROUND

Complex projects such as the planning and production of large commercial or military aircraft require the scheduling and coordination of a plurality of resources. The resources to be coordinated may include materials, component parts, personnel, machinery and factory floor space, in addition to other resources. Integration and coordination is particularly important in complex projects since higher-order effects and interactions can adversely affect the cost of the project, the time required for completion of the project, and the risk of failure to deliver the required content. In addition, other variables of importance such as the overall efficiency of the project need to be modeled and measured.

In a number of known methods, the planning process generally includes the processing of input data that defines task dependencies and estimated task durations. Task dependencies generally express relationships between various tasks, so that the various tasks may be properly ordered. For example, in the construction of large commercial aircraft, a material such as an aluminum sheet material must be procured before fuselage panels may be fabricated. The input data may be processed in accordance with a number of different techniques to arrange the various tasks into an ordered set. In some cases, a multiplicity of different paths may result from processing the input data, which may include multiple paths that could end up being critical. The critical path may be the sequence of tasks throughout the project that determines its duration, and may be the path with the least amount of scheduling flexibility (float). Accordingly, it is the path along which no delay in the provision of a necessary resource may occur without delaying the entire project, and is thus of central importance in project execution. The manufacturing process may therefore be analyzed based upon relationships between the various individual tasks comprising the process, and upon a critical path for the process. The critical path may shift from a first task set to another task set as resource delays occur and/or task durations vary from their estimated values. Accordingly, the critical path is not fixed, and may change.

Although existing process planning methods are useful, they nevertheless exhibit drawbacks. The total-ordering of products produced during the course of a process may enable efficient execution of the process. Existing methods do not support determining total order, and the use of scheduling as the basis for order often causes significant our-of-sequence rework to manifest. Total order information may indicate that schedule constraints imposed by current methods should be overridden to achieve the greater consistency provided by imposing ordering constraints. The current methods of control using scheduling over-constrain the process to be unachievable. Current methods of managing large-scale product development are the problem.

### BRIEF SUMMARY

Example implementations of the present disclosure are generally directed to a system, and corresponding method and computer-readable storage medium for total-ordering for stochastic processing planning models. Existing solutions demonstrate an inability to provide the necessary conditions to manage large-scale product development programs within the original cost and schedule requirements that were necessary for financial business case justification. Example implementations may provide the information that addresses a primary root cause of cost/schedule overruns, and may produce information to support a remedy. Example implementations may provide information supporting the ability to replicate the cause and effect of cost and schedule overruns caused by use of the existing solutions.

According to one aspect of example implementations, a method is provided that includes receiving process-related information describing a hierarchical process for production of a product. The process may include two or more segments having precedence relationships, each of at least some of the segments including two or more segment components at least some of which have precedence relationships across segments. The method also includes determining an instance in which the segment components are total-ordered, which may include determining an instance in which the segments are total-ordered. For the total-ordered segments, the segment components may be partitioned by disjoint collections based upon earliest availability to produce earliest-available partitions, and separately based upon latest availability to produce latest-available partitions. Order flexibility may be identified for each segment component based upon membership in both earliest-available and latest-available partitions, and an instance in which each partition in both the earliest-available and latest-available partitions contains only one order-inflexible segment component may be determined. In this instance, the segment components may be total-ordered.

In one example, determining the instance in which the segment components are total-ordered may further include performing a consistency check of a level of content detail of segment components across a number of bordering partitions. In an instance in which the consistency check fails, segment components with overly-specific content detail may be merged into other segment components of the same segment, or segment components of the same segment may be revised to add more specific characterization to the content detail of the respective segment components.

In one example, the method may further include receiving further process-related information describing the process in which each of at least some of the segment components include two or more lower-level components at least some of which have precedence relationships across segment components. In this example, an instance in which the lower-level components are total-ordered may be determined.

In a further example, determining the instance in which the lower-level components are total-ordered may includes partitioning the lower-level components by disjoint collections based upon earliest availability to produce lower-level earliest-available partitions, and separately based upon latest availability to produce lower-level latest-available partitions. Order flexibility may be identified for each lower-level component based upon membership in both lower-level earliest-available and latest-available partitions. And an instance in which each partition in both the lower-level earliest-available and latest-available partitions contains only one order-inflexible lower-level component may be determined. The lower-level components may thereby be total-ordered.

In one example, determining the instance in which the lower-level components are total-ordered may further include performing a consistency check of a level of content detail of lower-level components across a number of bordering lower-level partitions. In an instance in which the consistency check fails, lower-level components with overly-specific content detail may be merged into other lower-level components of the same segment component, or lower-level components of the same segment component may be revised to add more specific characterization to the content detail of the respective lower-level components.

In one example, the process may include lower-level components at one or more lower levels of the hierarchy including a lowest level. The lower-level components at the lowest level may be lowest-level components at least some of which have precedence relationships across parent components at a parent level of the hierarchy. In this example, the method may further include determining an instance in which the lowest-level components are not total-ordered, but the parent components are total-ordered. And the method may further include confirming total-order of the process through its lowest level, or adjusting content of the lowest-level components to satisfy total-order.

In one example, confirming total-order of the process through its lowest level may include identifying disjoint partitions of lowest-level components containing multiple lowest-level, order-inflexible components, and defining input/output threads of the respective components across a number of preceding and/or succeeding partition boundaries. An instance in which only one of the lowest-level, order-inflexible components in its partition has only corresponding lowest-level, order-inflexible components in its input/output thread may then be determined. The lowest-level components of the process may thereby be total-ordered.

In other aspects of example implementations, a total-ordering system and computer-readable storage medium are provided. The features, functions and advantages discussed herein may be achieved independently in various example implementations or may be combined in yet other example implementations further details of which may be seen with reference to the following description and drawings.

### BRIEF DESCRIPTION OF THE DRAWING(S)

Having thus described example implementations of the disclosure in general terms, reference will now be made to the accompanying drawings, which are not necessarily drawn to scale, and wherein:
FIG. 1 illustrates a process-planning system in accordance with an example implementation;
FIGS. 2 and 3 illustrate feed-forward networks in accordance with example implementations;
FIG. 4 illustrates one example of a total-ordering system in accordance with an example implementation; and
FIG. 5 illustrates a more particular example of a total-ordering system in accordance with an example implementation.

### DETAILED DESCRIPTION

Some implementations of the present disclosure will now be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. For example, unless otherwise indicated, reference something as being a first, second or the like should not be construed to imply a particular order. Also, something may be described as being above something else (unless otherwise indicated) may instead be below, and vice versa; and similarly, something described as being to the left of something else may instead be to the right, and vice versa. Like reference numerals refer to like elements throughout.

In complex projects such as aircraft planning and production, significant numbers of products including physical products (e.g., objects) and non-physical products (e.g., information) must be produced to satisfy the development, design manufacture and verification of the end product. The nature of the processes and end product dictates the products that must be produced. The rate of maturity of each required product varies throughout the development process due to physical interdependencies of physical products and functional relationships within non-physical products associated with design and manufacture of the end product.

Violation of the proper order of execution in the production of physical and non-physical products creates consistency issues within the project, which often causes out-of-sequence rework to resolve. Out-of-sequence conditions may be reduced if not prevented by modeling a system/process to establish a feed-forward context for execution. One example of such a method is described in U.S. Patent No. 7,899,768, entitled: *Methods and Systems for Constructing a Scalable Hierarchical Feed-Forward Model for Fabricating a Product,* issued Mar. 1, 2011. If sufficient information is exposed in constructing a model of the product development process to satisfy total-ordering, then the most efficient execution of the process is possible. But to satisfy total order in a large-scale hierarchical model, conditions of sufficiency of information must be established, without which total order is indeterminate and ambiguity in the proper selection of order may cause inefficiencies such as out of sequence rework that are costly in terms of both time and resource requirements. And without confirmation total order is satisfied, order selection may become arbitrary or guided by heuristics that are suspect and ineffective when applied to large-scale complex problems.

Using networks of events and schedule exploiting historical experience are often perceived to satisfy the necessary ordering of tasks and decisions to meet objectives. Scheduling is the basis of imposing an ordering of execution of tasks and association of resource requirements based upon estimated durations of tasks. Using scheduling as the mechanism to control resource expenditures and progress, however, may compromise the necessary state of completeness of information and physical items necessary for consistency. If uncertainty exists in the tasks or the estimates of task effort are wrong, and schedules are used as a mechanism for controlling the order of execution without regard to the conditions necessary to satisfy consistency, conflicts may manifest. These conflicts may include, for example, proceeding without the necessary state of task completion, which may require out-of-sequence rework to reconcile.

The current approach of scheduling as perceived order of execution of all tasks may eliminate the exploitation of a large amount of ordering flexibility in production of most physical and non-physical products that may be available when total-ordering is determined. Uncertainty associated with developing new complex products is inherent in the large-scale, non-linear and dynamic processes needed to satisfy requirements of design, production system development, infrastructure development, manufacturing, verification/certification and the like. Using schedules to govern an order of execution and not just a mechanism to reflect progress is the current practice. Because the current approach to the problem of managing large-scale product development is schedule-driven, it often causes large-scale out-of-sequence rework to manifest throughout development. This often results in large cost overruns and time delays. The historical data used as the experience base for scheduling resources and events for new development programs is often contaminated with unplanned out-of-sequence rework, which only serves to drive future decisions on product development to be much more difficult to justify.

Example implementations of the present disclosure therefore provide a system and method to identify establishment of sufficient information to determine total order in a process, such as a large-scale complex process with significant parallel tasks. Example implementations may also discriminate flexibility in variation in order within a process with parallel tasks in instances in which sufficient information to satisfy total-ordering is established. The determination of strict-order and order-flexibility associated with tasks in a large-scale complex process may provide the context necessary to establish integration constraints of the process. Ordering constraints may enable differentiation in the degree of impact that individual products produced during performance of the process may have on process execution performance and resources. Adherence to integration constraints may provide the most efficient execution of the process possible.

Example implementations will be primarily described in conjunction with scalable, hierarchical feed-forward processes, but it should be understood that example implementations may be equally applicable to any of a number of other types of processes. Also, example implementations will be primarily described in conjunction with aircraft production. But again, it should be understood that example implementations may be utilized in conjunction with a variety of other applications, both in the aircraft industry and outside of the aircraft industry.

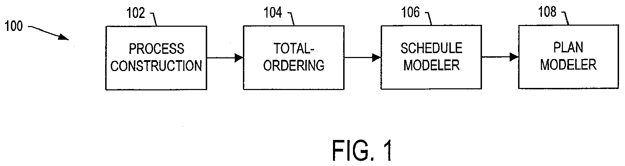

Referring now to FIG. 1, a process-planning system **100** is illustrated according to example implementations of the present disclosure. The system may include any of a number of different subsystems (each an individual system) for performing one or more functions or operations. As shown, for example, the system may include a process-construction system **102,** total-ordering system **104,** schedule modeler **106** and/or plan modeler **108.** The process-construction system may be generally configured to construct a process for production of a product. The total-ordering system may be generally configured to establish total-ordering in a process such as that constructed by the process-construction system (well-ordering at times being used interchangeably, but more specifically referring to total-ordered set in which every non-empty subset has a minimum element). The schedule modeler may be generally configured to construct a process schedule according to a total-ordered process such as that from the total-ordering system. The plan modeler, then, may be configured to construct a plan model based on the process and its schedule. Although shown as part of the process-planning system, one or more of the process-construction system, total-ordering system, schedule modeler and/or plan modeler may instead be separate from but in communication with the process-planning system. It should also be understood that one or more of the subsystems may function or operate as a separate system without regard to others of the subsystems. And further, it should be understood that the process-planning system may include one or more additional or alternative subsystems than those shown in FIG. 1.

As indicated above, the process-construction system **102** may be configured to construct a process for production of a product. A product, including physical products (e.g., objects) and non-physical products (e.g., information), may be described in terms of a hierarchical breakdown (hereinafter referred to as a "hierarchy") of the product's components. A "process" may be adapted to describe production of the product by defining tasks and precedences associated with the creation of each component. For example, the precedences may indicate that a particular task should be completed before another task is performed. In various examples, a task may refer to an activity or set of activities performed during creation of a component.

A complex process may include one or more sub-processes each of which may at times be considered a separate process without regard to the complex process or others of the sub-processes. In one example, the process constructed by the process-construction system **102** may be expressible as a network. The process-construction system may construct a suitable network in any of a number of different manners. In one example, the process-construction system may construct the network in accordance with technologies described in the aforementioned '768 patent. In one example, the process, and thus its network expression, may be adapted to maintain a feed-forward constraint such that no cycles or loops are contained within the process. The process and its network expression may also be scalable such that it may be combined with other processes to generate a larger process.

As used herein, a "product" may refer to something input into or produced by a process in the network. An illustrative process may be a commercial aircraft development process. In one example, a product of the commercial aircraft development process may include an aircraft or a part of the aircraft (e.g., fuselage section, wing, landing gear, engine, etc.). In another example, the product may include a type certificate or other relevant document related to legal use of the aircraft. In yet another example, the product may include a design specification or other dataset related to the design and/or construction of the aircraft. Some other examples of products may include a wing center section, a control column and wheel, an overhead stowage bin, a layout of passenger arrangement, front spar interface loads, pitching moment curves and the like.

The product may be either an "internal product" or an "external product." An internal product may be producible by one or more tasks in the network (the respective one or more tasks in various instances being considered a sub-process). In one example, an internal product may be considered a segment, which may be an internal product that is not a component of another internal product, but is instead intended to be broken into more detailed components. An internal product may receive as input an external product and/or an internal product. Some examples of internal products in the commercial aircraft development process may include avionics, propulsion systems, engine-specific fuel consumption curves and the like. Each internal product may include one or more "internal inputs," which may be utilized or needed to produce the internal product.

The internal inputs may include "internal components" and "component inputs." The internal components may refer to a subset of non-external inputs that is not part of the same segment as the internal product. The component inputs may refer to a subset of non-external inputs that is part of the same segment as the internal product. Each component input may include multiple "component products," the aggregate of which form the component input. An illustrative internal product may be a subassembly. For the subassembly, an example component input may be parts of the subassembly, and an example internal component may be a tool that assembles the parts to produce the subassembly. In this case, the parts assemble to form the subassembly. As such, the parts are considered in the same segment as the subassembly. In contrast, the tool that assembles the parts is not included within the subassembly. As such, the tool is considered as not part of the same segment as the subassembly.

The external product may be produced outside of a process in the network. In contrast to the internal product, input to the external product may not be represented in the context of the process or its network expression. Some examples of external products in the commercial aircraft development process may include regulatory requirements, customer requirements, company ground rules, existing facilities and the like. The external product may include multiple components, the aggregate of which forms the external product. Each such component forming the external product may be referred to herein as an "external component." The internal products, external products, internal components, component inputs and/or external components may form the set of inputs into a process adapted to produce any given internal product.

Each internal product may be a component. Each component may include multiple nested components, and may further include additional nested components at deeper levels of the hierarchy. In the commercial aircraft development process, some examples of segment components may include technology assessment, exploratory design, conceptual design, preliminary design, production system, infrastructure, detail manufacturing plans, vehicle product, product validation and the like. The example component "infrastructure" may include a nested component "production facilities," which further includes a nested component "major assemblies." The component "major assemblies" may include a nested component "wing center section," which further includes a nested component "upper panel." Additional nested components may continue from the component "upper panel."

As used herein, an "input" may refer to a product, such as an internal or external product, that may be utilized or required by the task to produce another product. That is, a statement that a first product is input to a second product may refer to the utilization or requirement of the first product by the task to produce the second product. For example, an internal product may be a design specification of an airplane wing. An external product may be specifications of fasteners that are utilized or required in the production of the detailed design. In this case, since the design specification of the airplane wing utilizes or requires the specifications of fasteners, the specifications of fasteners may also be referred to as an external input to the design specification of the airplane wing. According to some example implementations, an internal product can receive an input, but an external product cannot receive an input. Example technologies for selecting the inputs are described in the above-referenced'768 patent.

The process constructed by the process-construction system **102** may be expressed by a feed-forward network including one or more external products and two or more segments. In one example, as described in greater detail in the '768 patent, the process construction may include selection of one or more segments as final products of the process. At the segment level, the feed-forward network may be initialized by selection of other segments required for the production of a final segment as its input. Then, any input which does not violate the order of the feed-forward network may be specified, further augmenting the feed-forward network. If a segment requires only external products as inputs to produce its product, it may be an initial product. Establishment of a feed-forward network that connects initial products to final products and contains all segments of the network may be necessary to complete this, segment-level phase of the process construction. In various examples, new external products and segments that establish proper connection to the feed-forward network may be added. This may imply that all segments have at least one specified internal or external input.

As indicated above, segments may be internal products of the process intended to be broken into more detailed components. Similarly, external products may be broken into more detailed external products. Internal and external products may form a hierarchy rooted at the process. When creating a new, lower-level of the feed-forward network, this hierarchy may be uniformly expanded by adding components and external products that are connected into the network at this new level. Two or more components may be defined for each segment to create the next level of the network. Similarly, each of the external products required for the process may have at least two detailed external products composing it, which may be defined.

The selection of inputs to components may be more restrictive than the selection of inputs into segments. A sub-network, which is also feed-forward and connects only components of a single segment, may be established for each segment such as by specifying the component inputs of each component. Further, components of the inputs of the containing segment may be the only possible internal inputs to a component. The external inputs to a component may be similarly constrained. The addition of internal and external inputs to a component may integrate that component and the component sub-network into the feed-forward network at the component's level. At least one of a segment's components may input at least one of the components of each of that segment's internal inputs, and similarly, for specifying external inputs for the component from the segment's external inputs.

The process hierarchy may be further broken down by adding levels of components and external products. The component inputs of each containing component may constrain the internal inputs of the contained component in the same way the internal inputs of a segment constrain the internal inputs of its components. Otherwise, levels of components and their resulting sub-networks may be specified in the same way as the first level of components of segments.

Two processes with the same level of hierarchical breakdown constructed as above may be combined if products of one of the processes can be mapped to the external inputs of the other. Similarly, two feed-forward networks at the segment level are such that the external input requirements of one do not precede the external input requirements into the other, the networks may be combined into a single process.

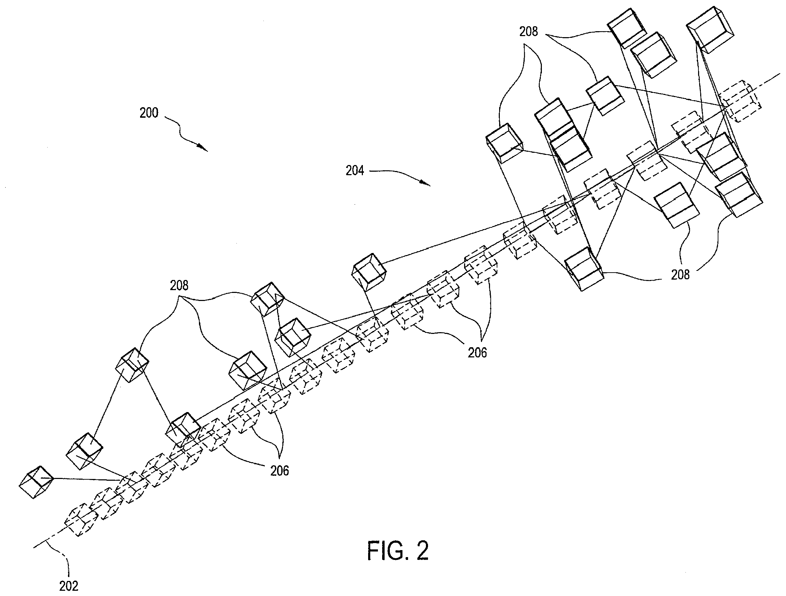

FIG. 2 illustrates an example layout of a suitable network diagram **200** that may express a process constructed by the process-construction system **102** of one example implementation. Standard network characteristics may be used in the layout to add meaning to displayed data. As shown, for example, the network includes a central time-directed axis **202,** and a plurality of network nodes **204** that express respective products of the process. The nodes may be connected by edges reflecting precedence relationships between the nodes, and correspondingly between the respective products of the process. Each of the network nodes may include an associated slack parameter that may be used to determine a distance of the network node from central time-directed axis. In this regard, nodes **206** having zero slack values may be selected to lie on or near the axis, and other nodes **208** having higher slack values may be positioned about the axis. In one example, nodes **206** may be strictly-ordered nodes without flexibility in their order (linearly constrained), and the axis may be a linear, strictly-ordered axis. In this example, the other nodes **208** may be parallel nodes that have some flexibility in their order. As explained in greater detail below, nodes **206** may form a first or alpha chain, and other nodes **208** may form one or more second or second alpha chains.

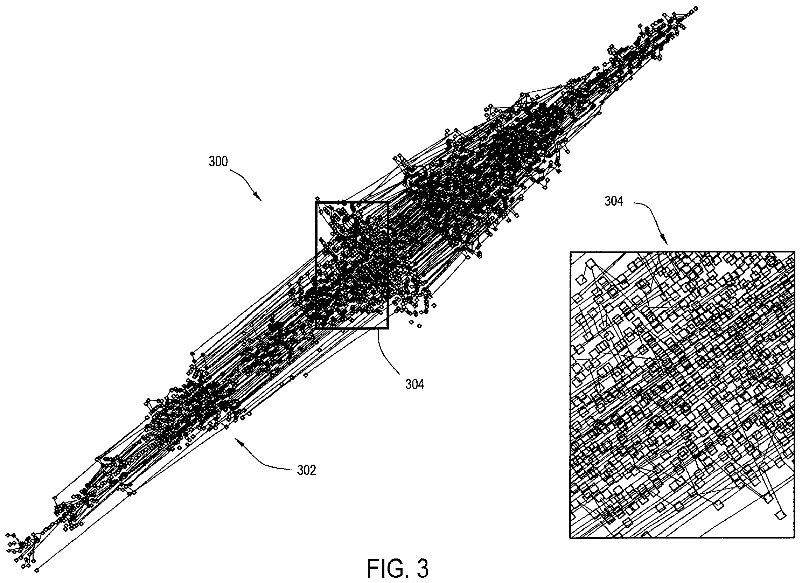

FIG. 3 illustrates a suitable network diagram **300** similar to diagram **200,** but that may express a more complex process. As shown, similar to the diagram of FIG. 2, the network diagram of FIG. 3 a plurality of network nodes **302** that may be connected by edges reflecting precedence relationships between the nodes, a portion of which are further highlighted in inset **304.** For more information regarding the layouts of FIGS. 2 and 3, as well as other suitable layouts according to example implementations, see U.S. Patent No. 7,873,920, entitled: *Methods and Systems for Displaying Network Information,* issued Jan. 18, 2011. For other example layouts of suitable network diagrams, see U.S. Patent Application Publication No. 2012/0050287, entitled: *Three-Dimensional Display of Specifications in a Scalable Feed-Forward Network,* published Mar. 1, 2012.

In a network diagram such as the network diagrams **200, 300** of FIGS. 2 and 3, the nodes **204, 302** may represent the tasks to produce the internal products. The edges connecting nodes, then, may represent the internal products and reflect the precedence relationships between tasks. For example, an internal product that is utilized or required for production of another internal product may be represented by an edge connecting nodes representing the tasks to produce the respective internal product and other internal product. In this example, the task to produce the internal product may be considered a predecessor, and the task to produce the other internal product may be considered a successor. In this manner, the tasks (nodes) to produce internal products of the process expressed by the network may be properly ordered according to the internal products (edges) connecting them.

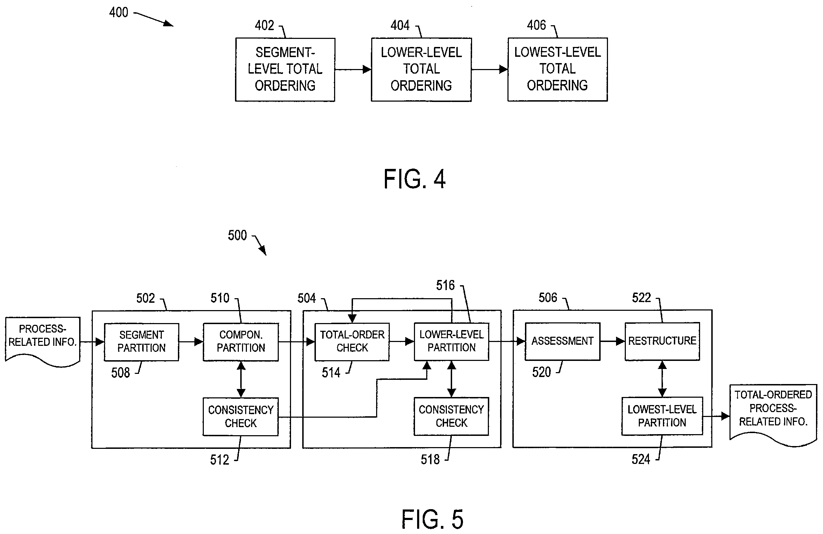

In one example, the total-ordering of internal products may enable efficient execution of the process. In this regard, ordering constraints such as total ordering may enable differentiation of the degree of impact that individual internal products may have on the process execution performance and resources. Adherence to integration constraints may enable efficient execution of the process. FIG. 4 illustrates a total-ordering system **400** that in one example may correspond to the total-ordering system **104** of FIG. 1. As shown, the total-ordering system **400** may be generally configured to establish total-ordering in a process such as that constructed by the process-construction system. As shown, the total-ordering system may include a segment-level total-ordering module **402,** one or more lower-level total-ordering modules **404** and a lowest-level total-ordering module **406.** In various examples, the total-ordering system may only include the segment-level total-ordering module, or may only include the segment-level total-ordering module and lower level total-ordering module. Or for greater detail, the total-ordering system may include the segment-level total-ordering module, one or more lower level total-ordering modules and the lowest-level total-ordering module.

As explained in greater detail below, the segment-level total-ordering module **402** may be configured to establish total-ordering at the segment level in a hierarchical feed-forward process, such as that constructed by the process-construction system **102.** The segment-level total-ordering module may also be configured to rebalance the level of detail during establishment of a network model structure to achieve consistency in content. The lower-level total-ordering module **404** may be configured to determine if total-ordering has been satisfied through decomposition of a process into one or more lower-levels, and may also rebalance the level of detail during decomposition. Similarly, the lowest-level total-ordering module **406** may be configured to confirm total-order of the process through its lowest level. In various examples, the lowest-level total-ordering module may also be configured to adjust content of the lowest-level components to satisfy total-order. In various examples, the total-ordering system **400** may produce a total-ordered process that may be expressed as a scalable, hierarchical feed-forward network with consistency in the detail content present in each hierarchical level.

Reference will now be made to FIG. 5, which illustrates a more particular example of a suitable total-ordering system **500** including segment-level, lower-level and lowest level total-ordering modules **502, 504, 506.** In one example, the system and its modules may correspond to the total-ordering system **400** and respective ones of the segment-level, lower-level and lowest level total-ordering modules **402, 404, 406** of FIG. 4.

As shown, the segment-level total-ordering module **502** may include a segment partitioner **508,** component partitioner **510** and consistency checker **512** coupled to one another. The segment partitioner may be configured to receive process-related information that generally may describe a particular hierarchical process at the segment-level, such as may be expressed by a suitable network. That is, the segment partitioner may be configured to receive process-related information for a process including two or more segments having precedence relationships, each of at least some of the segments including two or more segment components at least some of which have precedence relationships across segments.

The process-related information may describe the internal products, external products, internal components, component inputs and/or external components of the process at the segment-level. The process-related information may describe the tasks to produce the internal product, and precedence relationships between tasks (predecessors, successors). In one example, the process-related information may be received from a process-construction system such as process-construction system **102.** The process-related information may describe segments of the process, which the segment partitioner **508** may be configured to partition by disjoint collections based upon earliest availability.

The segment-level total-ordering module **502** may be configured to determine an instance in which the segment components are total-ordered. In one example, relative to the network expression of the particular process, the segment partitioner **508** may be configured to partition the segments into sets of concurrent nodes (each node a respective segment). The segment partitioner may determine a first set of concurrent nodes by selecting all nodes that are not successors of any edge in the network. The second set of concurrent nodes includes those nodes that are successors only of edges whose predecessors are contained in first set of nodes. Subsequent sets may be formed by selecting nodes that are successors only for edges for which the predecessors are contained in the previous concurrent sets of nodes. This may be repeated until the network is partitioned into sets of concurrent nodes. The sets of concurrent nodes may be maintained in the sequential order of construction.

For each set of concurrent nodes, the segment partitioner **508** may simulate the application of forces. The segment partitioner may thereby determine a spatial arrangement of its nodes, and determine those edges for each node where that node is a predecessor and the successor node of the edge is in the nearest following set of concurrent nodes where the resulting set of edges is not empty. The result may be a set of earliest following nodes (which may be empty) for each node in the network. As described herein, a set of concurrent nodes may at times be referred to as a partition.

After partitioning the segments, the segment partitioner **508** may determine the number of segments in each partition, and whether each partition contains only one segment or more than one segment. In an instance in which each partition contains only one segment, the segments of the process may be considered total-ordered. On the other hand, in an instance in which a partition contains more than one segment, the segment partitioner may assimilate or otherwise merge the segments in the same partition into a single segment. In one example, the partitioner may merge segments with membership in more than one partition into a segment that has membership in the same, earliest possible partition. The partitioner may then repartition the segments of the process (now including the merged segments in the same partition). The segment partitioner may then again determine the number of segments in each partition, and whether each partition contains only one segment or more than one segment. This may repeat until each partition contains only one segment, with the segments of the process thereby being total-ordered. The segment partitioner may thereby be configured to determine an instance in which the segments of the process are total-ordered.

The component partitioner **510** of the segment-level total-ordering module **502** may be configured to receive further process-related information that generally may describe components of the total-ordered segments. This may represent a decomposition of the ordered segments into their respective components. Similar to before, in one example, the further process-related information may be received from a process-construction system such as process-construction system **102.** The component partitioner may be configured to partition the components of the total-ordered segments by disjoint collections based upon earliest availability to produce earliest-available partitions, and separately based upon latest availability to produce latest-available partitions. For the partitioning based on earliest availability, for example, the component partitioner may partition the components in a manner similar to that described above. The partitioning based on latest availability may likewise occur similar to above, but determine those edges for each node where that node is a predecessor and the successor node of the edge is in the farthest following set of concurrent nodes where the resulting set of edges is not empty. This may result in a set of latest following nodes (which may be empty) for each node in the network. To distinguish from the former, segment partitions, these partitions may be referred to as segment-component partitions.

The component partitioner **510** may identify order flexibility for each segment component based upon membership in both earliest-available and latest-available partitions. In an instance in which a segment component has membership in identical earliest-available and latest-available partitions, the product segment may have no order flexibility (i.e., it may be order inflexible). On the other hand, in an instance in which a segment component has membership in different earliest-available and latest-available partitions, the product segment may have order flexibility. The component partitioner may then determine if each partition in both the earliest-available and latest-available partitions contains only one order-inflexible segment component. In this instance, the partitions may be ordered, and the upper and lower boundaries of each partition's component membership may be determined. The segment components of the process may thereby be considered total-ordered.

In some instances, each partition in both the earliest-available and latest-available partitions may contain more than one order-inflexible segment component. The consistency checker **512** of the segment-level total-ordering module **502** may in these instances perform a consistency check of a level of content detail of segment components across a number of bordering partitions. In various examples, consistency problems may be probable in instances in which a segment's number of aggregate components is significantly different in number than that of other segments. Consistency problems may also exist in instances in which significant differences in content detail of segment components occur across bordering partitions. An example of this may be the identification of relationships across partition boundaries of segment components that are system level (e.g., aircraft or factory), with segment components that are subcomponent level (e.g., air conditioning duct bracket or ground cart hydraulic fitting).

In instances in which the consistency check fails, the consistency checker **512** may assimilate or otherwise merge segment components with overly-specific content detail into other segment components of the same segment. This merger may bring the definition content of the assimilated components to a more appropriate generalization. In instances in which segment components do not contain sufficient definition of content (insufficiently specific to relate appropriately with components in bordering partitions), the consistency checker may revise segment components of the same segment to add more specific characterization to the content detail of the respective segment components.

After either or both of the aforementioned merger or revision, the consistency checker **512** may communicate back with the component partitioner **510,** which may repartition the segment components (now including the merged and/or revised segment components). The component partitioner may then again partition the segment components, identify order flexibility for each segment component and determine if each partition in both the earliest-available and latest-available partitions contains only one order-inflexible segment component.

The foregoing operations of the component partitioner **510** and consistency checker **512** may repeat until each partition in both the earliest-available and latest-available partitions contains only one order-inflexible segment component, or the consistency check is satisfied. Again, in the instance that each partition in both the earliest-available and latest-available partitions contains only one order-inflexible segment component, the partitions may be ordered, and the upper and lower boundaries of each partition's component membership may be determined, with the segment components of the process thereby being total-ordered.

The lower-level total-ordering module **504** may include a total-order checker **514,** lower-level component partitioner **516** and second consistency checker **518** coupled to one another. In one example, the total-order checker may be configured to determine an instance in which the segment components of the process are total-ordered, with the partitions being ordered, and the upper and lower boundaries of each partition's component membership being determined. The total-order checker may also determine whether the network exposes a sufficient level of detail to properly characterize the process. In instances in which no further detail is required, the process may be considered total-ordered. Otherwise, in instances in which further detail may be desired or otherwise required, the total-order checker may communicate with the lower-level component partitioner to continue decomposition of the network. In one example, the consistency checker **512** may similarly communicate with the lower-level component partitioner in instances in which each segment partition in both the earliest-available and latest-available partitions contains more than one order-inflexible segment component, but the consistency check is satisfied.

The lower-level total ordering module **504** may be configured to determine an instance in which the lower-level components are total-ordered. In one example, the lower-level component partitioner **516** may be configured to receive even further process-related information that generally may describe lower-level components of the segment components. In this regard, in the process, each of at least some of the segment components include two or more lower-level components at least some of which have precedence relationships across segment components. In various examples, the process may include lower-level components at one or more lower levels of the hierarchy including a lowest level. The lower-level components at the lowest level may be lowest-level components at least some of which have precedence relationships across parent components at a parent level of the hierarchy. Again, this may represent a decomposition of the segment components into their respective lower-level components. Again, the process-related information may be received from a process-construction system such as process-construction system **102.**

The lower-level component partitioner **516** may be configured to process the lower-level components in a manner similar to the component partitioner **510** being configured to process segment components. In this regard, the lower-level component partitioner may partition the lower-level components of the segment components by disjoint collections based upon earliest availability to produce lower-level earliest-available partitions, and separately based upon latest availability to produce lower-level latest-available partitions. The lower-level component partitioner may also identify order flexibility for each lower-level component through membership in respective lower-level earliest-available and latest-available partitions. In one example, the partitioning and identification of order flexibility may occur in a manner similar to that described above for the component partitioner **510.** Similar to before, in an instance in which a lower-level component has membership in identical lower-level earliest-available and latest-available partitions, the segment component may have no order flexibility (i.e., it may be order inflexible). On the other hand, in an instance in which a lower-level component has membership in different lower-level earliest-available and latest-available partitions, the segment component may have order flexibility.

The lower-level component partitioner **516** may determine if each partition in both the lower-level earliest-available and latest-available partitions contains only one order-inflexible, lower-level component. In this instance, the partitions may be ordered, and the upper and lower boundaries of each partition's lower-level component membership may be determined. The lower-level components of the process may thereby be considered total-ordered. The lower-level component partitioner may then communicate back with the total-order checker **514** to determine whether the network now exposes a sufficient level of detail to properly characterize the process. If not, the lower-level component partitioner may receive an even further decomposition of the network and repeat its operations.

In some instances, each partition of a component in both the lower-level earliest-available and latest-available partitions may contain more than one order-inflexible lower-level component. The lower-level component partitioner **516** may in these instances determine if the parent level (e.g., segment level) of the network is total-ordered. If not, the second consistency checker **518** may perform a consistency check of a level of content detail of lower-level components across a number of bordering partitions, such as in a manner similar to that described above for the consistency checker **512.** Similar to before, in instances in which the consistency check fails, the second consistency checker may merge and/or revise lower-level components, such as in a manner similar to that described above.

After either or both of the merger or revision, or in instances in which the consistency check is satisfied, the second consistency checker **518** may communicate back with the lower-level component partitioner **516,** which may repartition the lower-level components (now including the merged and/or revised lower-level components). The lower-level component partitioner may then again partition the lower-level components, identify order flexibility for each lower-level component and determine if each partition in both the lower-level earliest-available and latest-available partitions contains only one order-inflexible lower-level component. The lower-level component partitioner and second consistency checker may repeat their operations until the parent level of a given lower-level of the network is total-ordered.

As suggested above, the lowest-level total-ordering module **506** may be configured to determine if total-ordering has been satisfied through the lowest level of decomposition of a process. The lowest-level total-ordering module **506** may include an assessor **520,** restructurer **522** and lowest-level component partitioner **524** coupled to one another.

Situations may exist that as large-scale, complex processes continue to decompose to a desired or required level of detail after achieving total-ordering in higher-levels of the process, the determination of total-ordering of the process may benefit from a modification. In some instances, for example, the lowest-level of the network may not be total-ordered, but its parent level may be total-ordered. In these instances, the assessor **520** may determine whether the network exposes a sufficient level of detail to properly characterize the process.

In instances in which no further detail (decomposition) is required, the assessor **520** may identify the disjoint partitions containing multiple lowest-level, order-inflexible components, and define input/output threads of the lowest-level, order-inflexible components across a number of preceding and/or succeeding partition boundaries. The assessor may then determine if the condition exists that only one of the lowest-level, order-inflexible components in its partition has only corresponding lowest-level, order-inflexible components in its input/output thread. If yes, the partitions may be ordered, and the upper and lower boundaries of each partition's lowest-level component membership may be determined, with the lowest-level components of the process thereby being total-ordered. Again, in some instances, the parent component of the lowest-level may be order-inflexible, but when decomposed for additional detail, its children may decompose into multiple order-inflexible components. Looking across partitions of the input/output threads of these multiple order-inflexible components may resolve the identification of choosing the appropriate child component to satisfy total order. This may not be a normal condition of a natural morphological decomposition, but may manifest in the manner that design specifications fragment at the lowest level of the process, and may therefore be handled by involving groups of partitions instead of looking at partitions individually.

If the condition does not exist that only one of the lowest-level, order-inflexible components in its partition has only corresponding lowest-level, order-inflexible components in its input/output thread, the restructurer **522** may be configured to restructure at least some of the lowest-level components of the process. In one example, the restructurer **522** may merge and/or revise lower-level components, such as in a manner similar to that described above for the consistency checker **512.** That is, the restructurer may assimilate lowest-level components that are too specific in definition detail into lowest-level components in the same segment lower-level component aggregation to rebalance the level of detail across partitions. Additionally or alternatively, the restructurer may revise the lowest-level components in the segment lower-level component aggregation that have insufficient characterization of details, which may expose required detail in the lowest level components to rebalance the process or rather its network expression. The restructurer may then perform one or more adjustments to rebalance the network, such as in accordance with construction methods performed by a process-construction system such as process-construction system **102.**

After the restructurer **522** rebalances the network, the lowest-level component partitioner **524** may process the lowest-level components in a manner similar to the component partitioner **510** processing segment components, and/or the lower-level component partitioner **516** processing the lower-level components. The lowest-level component partitioner may partition the lowest-level components by disjoint collections based upon earliest availability to produce lowest-level earliest-available partitions, and separately based upon latest availability to produce lowest-level latest-available partitions. The lowest-level component partitioner may also identify order flexibility for each lowest-level component through membership in respective lowest-level earliest-available and latest-available partitions.

The lowest-level component partitioner **524** may determine if each partition in both the lowest-level earliest-available and latest-available partitions contains only one order-inflexible, lowest-level component. In this instance, the partitions may be ordered, and the upper and lower boundaries of each partition's lowest-level component membership may be determined. The lowest-level components of the process may thereby be considered total-ordered. In some instances the network may exposes a sufficient level of detail to properly characterize the process. In other instances, however, the network may not expose sufficient detail. In these other instances, the lowest-level component partitioner may further determine if the parent level of the network is total-ordered, and if so, the needed detail may be localized in nature and achieved by the restructurer **522** revising lower-level components of the same component, similar to before. The restructurer may also again perform one or more adjustments to rebalance the network. The lowest-level component partitioner may then again process the lowest-level components in a manner similar to before. This may repeat until the lowest-level components of the process are total-ordered.

Briefly now returning now to FIG. 1, the network that expresses a process such as that constructed by the process-construction system **102,** and/or total-ordered by the total-ordering system **104,** may describe a logical sequence of tasks to produce internal products of the process. The schedule modeler **106** of the process-planning system **100,** then, may be generally configured to construct a process schedule for execution of at least some of the tasks of the process. For more information regarding a suitable schedule modeler and method according to which a process schedule may be constructed, see U.S. Patent Application No. 13/758,353, entitled: *Alpha-Chain Constraints for Process Planning,* filed concurrently herewithAs indicated above, the process-planning system **100** may further include a plan modeler **108** configured to construct a plan model based on a process and its schedule. In one example, the total-ordering system **104** or schedule modeler **106** may communicate process-related information (e.g., network) for a total-ordered process to the plan modeler, and the schedule modeler may communicate the process schedule to the plan modeler. The plan modeler then may compile the process-related information, plan schedule and any other appropriate information into a plan model. In one example, this other appropriate information may include resource-related information that describes resources and policy constraints on the process. Resource-related information may include, for example, manpower requirements and manpower availability, factory floor space availability, tooling requirements and/or any other resources required to execute the process. In various examples, the plan modeler may assign resources to execute the process, and may identify any potential conflicts or other issues that may arise during execution of the process. For example, the plan modeler may determine if a task requires a quantity of a particular resource greater than an amount that is currently available. In another example, the plan modeler may forecast a completion date for the process that exceeds its predetermined end date (e.g., milestone). These conflicts/issues may be communicated to appropriate personnel to facilitate their making decisions and taking various remedial actions.

Although described primarily in the context of a processing-planning system **100,** it should be understood that the total ordering determined by the total-ordering system **104** may be applicable to a complex process or model in a number of different contexts. In one example in which a model represents a physical system, total ordering may be useful in resolving internal timing between components, computation requirements, bandwidth requirements and/or transport delay flexibility within the system.

According to example implementations of the present disclosure, the process-planning system **100** and its subsystems including the process-construction system **102,** total-ordering system **104,** schedule modeler **106** and plan modeler **108** may be implemented by various means. Similarly, the examples of a total-ordering system **400, 500,** including each of their respective elements, may be implemented by various means according to example implementations. Means for implementing the systems, subsystems and their respective elements may include hardware, alone or under direction of one or more computer program code instructions, program instructions or executable computer-readable program code instructions from a computer-readable storage medium.

In one example, one or more apparatuses may be provided that are configured to function as or otherwise implement the systems, subsystems and respective elements shown and described herein. In examples involving more than one apparatus, the respective apparatuses may be connected to or otherwise in communication with one another in a number of different manners, such as directly or indirectly via a wireline or wireless network or the like.

Generally, an apparatus of exemplary implementations of the present disclosure may comprise, include or be embodied in one or more fixed or portable electronic devices. Examples of suitable electronic devices include a smartphone, tablet computer, laptop computer, desktop computer, workstation computer, server computer or the like. The apparatus may include one or more of each of a number of components such as, for example, a processor (e.g., processor unit) connected to a memory (e.g., storage device).

The processor is generally any piece of hardware that is capable of processing information such as, for example, data, computer-readable program code, instructions or the like (generally "computer programs," e.g., software, firmware, etc.), and/or other suitable electronic information. More particularly, for example, the processor may be configured to execute computer programs, which may be stored onboard the processor or otherwise stored in the memory (of the same or another apparatus). The processor may be a number of processors, a multi-processor core or some other type of processor, depending on the particular implementation. Further, the processor may be implemented using a number of heterogeneous processor systems in which a main processor is present with one or more secondary processors on a single chip. As another illustrative example, the processor may be a symmetric multi-processor system containing multiple processors of the same type. In yet another example, the processor may be embodied as or otherwise include one or more application-specific integrated circuits (ASICs), field-programmable gate arrays (FPGAs) or the like. Thus, although the processor may be capable of executing a computer program to perform one or more functions, the processor of various examples may be capable of performing one or more functions without the aid of a computer program.

The memory is generally any piece of hardware that is capable of storing information such as, for example, data, computer programs and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD or the like. In various instances, the memory may be referred to as a computer-readable storage medium which, as a non-transitory device capable of storing information, may be distinguishable from computer-readable transmission media such as electronic transitory signals capable of carrying information from one location to another. Computer-readable medium as described herein may generally refer to a computer-readable storage medium or computer-readable transmission medium.

In addition to the memory, the processor may also be connected to one or more interfaces for displaying, transmitting and/or receiving information. The interfaces may include a communications interface (e.g., communications unit) and/or one or more user interfaces. The communications interface may be configured to transmit and/or receive information, such as to and/or from other apparatus(es), network(s) or the like. The communications interface may be configured to transmit and/or receive information by physical (wireline) and/or wireless communications links. Examples of suitable communication interfaces include a network interface controller (NIC), wireless NIC (WNIC) or the like.

The user interfaces may include a display and/or one or more user input interfaces (e.g., input/output unit). The display may be configured to present or otherwise display information to a user, suitable examples of which include a liquid crystal display (LCD), light-emitting diode display (LED), plasma display panel (PDP) or the like. The user input interfaces may be wireline or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

As indicated above, program code instructions may be stored in memory, and executed by a processor, to implement functions of the systems, subsystems and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, a processor or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processor or other programmable apparatus to configure the computer, processor or other programmable apparatus to execute operations to be performed on or by the computer, processor or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processor or other programmable apparatus provide operations for implementing functions described herein.

Execution of instructions by a processor, or storage of instructions in a computer-readable storage medium, supports combinations of operations for performing the specified functions. It will also be understood that one or more functions, and combinations of functions, may be implemented by special purpose hardware-based computer systems and/or processors which perform the specified functions, or combinations of special purpose hardware and program code instructions.

As explained above, the problem of large cost and schedule overruns during complex product development programs may be caused by the current management methodology used in large-scale product development. The overriding focus on cost and schedule control as the mechanism to manage outcome may contribute a primary root cause of the problem. Example implementations of the present disclosure may model the problem as the creation of a succinct set of internal and external products that dictate the necessary order of execution through their interdependent relationships. Example implementations may further enable the ability to determine the availability of sufficient information necessary to discriminate influence of each deliverable on execution performance. If the necessary information is available, total-ordering of large scale complex product development may be determinable.

Integration of large-scale complex product development is primarily a problem of order. If proper order is violated, the amount of rework necessary to reconcile inconsistencies resulting from the out-of-sequence behavior in large development programs may grow in factors of the original planned work statement. Control of cost and/or schedule may be lost because of the amount of out-of-sequence rework created overwhelms resource constraints. Current methods and practices used in managing large-scale product development amplify rather than attenuate the problem by ignoring constraints such as ordering or consistency if they conflict with predetermined schedule requirements. Example implementations of the present disclosure provide the opportunity to remedy this condition. Total-order flexibility exploited during production of physical and non-physical products (e.g., objects, information) may enable the avoidance of proceeding forward without satisfying conditions of consistency, which may significantly reduce the work statement by avoiding out-of-sequence rework. Example implementations and the use of scheduling to only reflect the state of completion of products, and not as a basis for order of execution, may correct the problem caused by the current methods used in managing product development.

Further, the disclosure comprises constructions as set out below.

A computer-readable storage medium is disclosed having computer-readable program code portions stored therein that, in response to execution by a processor, cause an apparatus to at least: a receive process-related information describing a hierarchical process for production of a product, the process including two or more segments having precedence relationships, each of at least some of the segments including two or more segment components at least some of which have precedence relationships across segments; and determine an instance in which the segment components are total-ordered, including the apparatus being caused to: determine an instance in which the segments of the process are total-ordered; and for the total-ordered segments, partition the segment components by disjoint collections based upon earliest availability to produce earliest-available partitions, and separately based upon latest availability to produce latest-available partitions; and identify order flexibility for each segment component based upon membership in both earliest-available and latest-available partitions, and determine an instance in which each partition in both the earliest-available and latest-available partitions contains only one order-inflexible segment component, the segment components thereby being total-ordered.

The apparatus may be caused to determine an instance in which the segment components are total-ordered includes the apparatus being caused to perform a consistency check of a level of content detail of segment components across a number of bordering partitions, and in an instance in which the consistency check fails, merge segment components with overly-specific content detail into other segment components of the same segment, or revise segment components of the same segment to add more specific characterization to the content detail of the respective segment components.

The computer-readable storage medium may have further computer-readable program code portions stored therein that, in response to execution by the processor, cause the apparatus to further receive further process-related information describing the process in which each of at least some of the segment components include two or more lower-level components at least some of which have precedence relationships across segment components, and determine an instance in which the lower-level components are total-ordered.

The apparatus may be caused to determine an instance in which the lower-level components are total-ordered includes the apparatus being caused to partition the lower-level components by disjoint collections based upon earliest availability to produce lower-level earliest-available partitions, and separately based upon latest availability to produce lower-level latest-available partitions, and identify order flexibility for each lower-level component based upon membership in both lower-level earliest-available and latest-available partitions, and determine an instance in which each partition in both the lower-level earliest-available and latest-available partitions contains only one order-inflexible lower-level component, the lower-level components thereby being total-ordered.

The apparatus may be caused to determine an instance in which the lower-level components are total-ordered further includes the apparatus being caused to perform a consistency check of a level of content detail of lower-level components across a number of bordering lower-level partitions, and in an instance in which the consistency check fails, merge lower-level components with overly-specific content detail into other lower-level components of the same segment component, or revise lower-level components of the same segment component to add more specific characterization to the content detail of the respective lower-level components.

The process may include lower-level components at one or more lower levels of the hierarchy including a lowest level, the lower-level components at the lowest level being lowest-level components at least some of which have precedence relationships across parent components at a parent level of the hierarchy, wherein the computer-readable storage medium has further computer-readable program code portions stored therein that, in response to execution by the processor, cause the apparatus to further determine an instance in which the lowest-level components are not total-ordered, but the parent components are total-ordered, and confirm total-order of the process through its lowest level, or adjust content of the lowest-level components to satisfy total-order.

The apparatus may be caused to confirm total-order of the process through its lowest level includes the apparatus being caused to identify disjoint partitions of lowest-level components containing multiple lowest-level, order-inflexible components, and define input/output threads of the lowest-level, order-inflexible components across a number of preceding and/or succeeding partition boundaries, and determine an instance in which only one of the lowest-level, order-inflexible components in its partition has only corresponding lowest-level, order-inflexible components in its input/output thread, the lowest-level components of the process thereby being total-ordered.

Many modifications and other implementations of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific example implementations provided herein and that modifications and other implementations are intended to be included within the scope of the appended claims. Moreover, although the foregoing descriptions and the associated drawings describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

According to a first aspect, there is provided a total-ordering system (400) comprising:
a segment-level total-ordering module (402) configured to receive process-related information describing a hierarchical process for production of a product, the process including two or more segments having precedence relationships, each of at least some of the segments including two or more segment components at least some of which have precedence relationships across segments,
wherein the segment-level total-ordering module (402) is configured to determine an instance in which the segment components are total-ordered, the segment-level total-ordering module (402) including:
   a segment partitioner (508) configured to determine an instance in which the segments of the process are total-ordered; and
   a component partitioner (510) coupled to the segment partitioner (508) and, for the total-ordered segments, configured to partition the segment components by disjoint collections based upon earliest availability to produce earliest-available partitions, and separately based upon latest availability to produce latest-available partitions,
   wherein the component partitioner (510) is configured to identify order flexibility for each segment component based upon membership in both earliest-available and latest-available partitions, and determine an instance in which each partition in both the earliest-available and latest-available partitions contains only one order-inflexible segment component, the segment components thereby being total-ordered.

Optionally, the segment-level total-ordering module (402) further includes:
a consistency checker (512) coupled to the component partitioner (510) and configured to perform a consistency check of a level of content detail of segment components across a number of bordering partitions, and in an instance in which the consistency check fails, merge segment components with overly-specific content detail into other segment components of the same segment, or revise segment components of the same segment to add more specific characterization to the content detail of the respective segment components.

Optionally, the total-ordering system (400) further comprises:
a lower-level total ordering module (404) configured to receive further process-related information describing the process in which each of at least some of the segment components include two or more lower-level components at least some of which have precedence relationships across segment components,
wherein the lower-level total ordering module (404) is configured to determine an instance in which the lower-level components are total-ordered.

Optionally, the lower-level total ordering module (404) includes:
a lower-level component partitioner (510) configured to partition the lower-level components by disjoint collections based upon earliest availability to produce lower-level earliest-available partitions, and separately based upon latest availability to produce lower-level latest-available partitions,
wherein the lower-level component partitioner (510) is configured to identify order flexibility for each lower-level component based upon membership in both lower-level earliest-available and latest-available partitions, and determine an instance in which each partition in both the lower-level earliest-available and latest-available partitions contains only one order-inflexible lower-level component, the lower-level components thereby being total-ordered.

Optionally, the segment-level total-ordering module (402) further includes:
a consistency checker (512) coupled to the lower-level component partitioner (510) and configured to perform a consistency check of a level of content detail of lower-level components across a number of bordering lower-level partitions, and in an instance in which the consistency check fails, merge lower-level components with overly-specific content detail into other lower-level components of the same segment component, or revise lower-level components of the same segment component to add more specific characterization to the content detail of the respective lower-level components.

Optionally, the process includes lower-level components at one or more lower levels of the hierarchy including a lowest level, the lower-level components at the lowest level being lowest-level components at least some of which have precedence relationships across parent components at a parent level of the hierarchy,
wherein the lower-level total ordering module (404) is configured to determine an instance in which the lowest-level components are not total-ordered, but the parent components are total-ordered, and wherein the total-ordering system (400) further comprises a lowest-level total ordering module (406) configured to confirm total-order of the process through its lowest level, or adjust content of the lowest-level components to satisfy total-order.

Optionally, the lowest-level total ordering module (406) includes:
an assessor (520) configured to identify disjoint partitions of lowest-level components containing multiple lowest-level, order-inflexible components, and define input/output threads of the lowest-level, order-inflexible components across a number of preceding and/or succeeding partition boundaries,
wherein the assessor (520) is configured to determine an instance in which only one of the lowest-level, order-inflexible components in its partition has only corresponding lowest-level, order-inflexible components in its input/output thread, the lowest-level components of the process thereby being total-ordered.

According to a second aspect, there is provided a method comprising:
receiving process-related information describing a hierarchical process for production of a product, the process including two or more segments having precedence relationships, each of at least some of the segments including two or more segment components at least some of which have precedence relationships across segments; and
determining an instance in which the segment components are total-ordered, including:
   determining an instance in which the segments of the process are total-ordered; and for the total-ordered segments,
   partitioning the segment components by disjoint collections based upon earliest availability to produce earliest-available partitions, and separately based upon latest availability to produce latest-available partitions; and
   identifying order flexibility for each segment component based upon membership in both earliest-available and latest-available partitions, and determining an instance in which each partition in both the earliest-available and latest-available partitions contains only one order-inflexible segment component, the segment components thereby being total-ordered.

Optionally, determining the instance in which the segment components are total-ordered further includes:
performing a consistency check of a level of content detail of segment components across a number of bordering partitions, and in an instance in which the consistency check fails, merging segment components with overly-specific content detail into other segment components of the same segment, or revising segment components of the same segment to add more specific characterization to the content detail of the respective segment components.

Optionally, the method further comprises:
receiving further process-related information describing the process in which each of at least some of the segment components include two or more lower-level components at least some of which have precedence relationships across segment components; and
determining an instance in which the lower-level components are total-ordered.

Optionally, determining the instance in which the lower-level components are total-ordered includes:
partitioning the lower-level components by disjoint collections based upon earliest availability to produce lower-level earliest-available partitions, and separately based upon latest availability to produce lower-level latest-available partitions; and
identifying order flexibility for each lower-level component based upon membership in both lower-level earliest-available and latest-available partitions, and determining an instance in which each partition in both the lower-level earliest-available and latest-available partitions contains only one order-inflexible lower-level component, the lower-level components thereby being total-ordered.

Optionally, determining the instance in which the lower-level components are total-ordered further includes:
performing a consistency check of a level of content detail of lower-level components across a number of bordering lower-level partitions, and in an instance in which the consistency check fails, merging lower-level components with overly-specific content detail into other lower-level components of the same segment component, or revising lower-level components of the same segment component to add more specific characterization to the content detail of the respective lower-level components.

Optionally, the process includes lower-level components at one or more lower levels of the hierarchy including a lowest level, the lower-level components at the lowest level being lowest-level components at least some of which have precedence relationships across parent components at a parent level of the hierarchy, and wherein the method further includes:
determining an instance in which the lowest-level components are not total-ordered, but the parent components are total-ordered; and
confirming total-order of the process through its lowest level, or adjusting content of the lowest-level components to satisfy total-order.

Optionally, confirming total-order of the process through its lowest level includes:
identifying disjoint partitions of lowest-level components containing multiple lowest-level, order-inflexible components, and defining input/output threads of the lowest-level, order-inflexible components across a number of preceding and/or succeeding partition boundaries; and
determining an instance in which only one of the lowest-level, order-inflexible components in its partition has only corresponding lowest-level, order-inflexible components in its input/output thread, the lowest-level components of the process thereby being total-ordered.

According to a third aspect, there is provided a computer-readable storage medium having computer-readable program code portions stored therein that, in response to execution by a processor, cause an apparatus to at least:
receive process-related information describing a hierarchical process for production of a product, the process including two or more segments having precedence relationships, each of at least some of the segments including two or more segment components at least some of which have precedence relationships across segments; and
determine an instance in which the segment components are total-ordered, including the apparatus being caused to:
   determine an instance in which the segments of the process are total-ordered; and for the total-ordered segments,
   partition the segment components by disjoint collections based upon earliest availability to produce earliest-available partitions, and separately based upon latest availability to produce latest-available partitions; and
   identify order flexibility for each segment component based upon membership in both earliest-available and latest-available partitions, and determine an instance in which each partition in both the earliest-available and latest-available partitions contains only one order-inflexible segment component, the segment components thereby being total-ordered.

## Claims

1. A process-planning system (100) comprising a total-ordering system (400) configured to establish total-ordering of internal products of a manufacturing process for production of an aircraft to enable efficient execution of the process, the total-ordering system (400) comprising:
a segment-level total-ordering module (402) configured to receive manufacturing process-related information describing a hierarchical process for production of an aircraft, the process including two or more internal products corresponding to subassemblies of the aircraft producible by one or more tasks, each task referring to an activity or set of activities performed during manufacture of the internal product, and having precedence relationships indicating that a particular task should be completed before another task is performed, the two or more internal products being segments, each of at least some of the segments including two or more segment components corresponding to parts of the subassemblies of the aircraft at least some of which have precedence relationships across segments,
wherein the segment-level total-ordering module (402) is configured to determine an instance in which the segment components are total-ordered, the segment-level total-ordering module (402) including:
a segment partitioner (508) configured to determine an instance in which the segments of the process for production of an aircraft are total-ordered, to partition the segments into sets of concurrent nodes, to determine the number of segments in each set of concurrent nodes, and to determine whether each set of concurrent nodes contains only one segment or more than one segment,
wherein the segments of the process for production of an aircraft may be considered total-ordered in an instance in which each set of concurrent nodes contains only one segment,
wherein the segment partitioner (508) is configured to assimilate or otherwise merge segments in the same set of concurrent nodes into a single segment in an instance in which a set of concurrent nodes contains more than one segment,
wherein the segment partitioner (508) is configured to merge segments with membership in more than one set of concurrent nodes into a segment that has membership in the same, earliest possible set of concurrent nodes; and
a component partitioner (510) coupled to the segment partitioner (508) and, for the total-ordered segments, configured to partition the segment components by disjoint collections based upon earliest availability to produce earliest-available partitions, and separately based upon latest availability to produce latest-available partitions,
wherein the component partitioner (510) is configured to identify order flexibility for each segment component based upon membership in both earliest-available and latest-available partitions, and determine an instance in which each partition in both the earliest-available and latest-available partitions contains only one order-inflexible segment component, the segment components thereby being total-ordered.

2. The process-planning system (100) of Claim 1, the process planning system further comprising:
a schedule modeler (106) configured to construct a process schedule for execution of at least some of the tasks of the process for production of an aircraft;
a plan modeler (108) configured to assign resources to execute the process for production of an aircraft; and
program code instructions stored in a computer-readable storage medium that can direct a computer, a processor or other programmable apparatus to function in a particular manner to execute the process for production of an aircraft.

3. The process-planning system (100) of Claim 1, wherein the segment-level total-ordering module (402) further includes:
a consistency checker (512) coupled to the component partitioner (510) and configured to perform a consistency check of a level of content detail of segment components across a number of bordering partitions, and in an instance in which the consistency check fails, merge segment components with overly-specific content detail into other segment components of the same segment, or revise segment components of the same segment to add more specific characterization to the content detail of the respective segment components.

4. The process-planning system (100) of Claim 1 further comprising:
a lower-level total ordering module (404) configured to receive further process-related information describing the process for production of an aircraft in which each of at least some of the segment components include two or more lower-level components at least some of which have precedence relationships across segment components,
wherein the lower-level total ordering module (404) is configured to determine an instance in which the lower-level components are total-ordered.

5. The process-planning system (100) of Claim 4, wherein the lower-level total ordering module (404) includes:
a lower-level component partitioner (510) configured to partition the lower-level components by disjoint collections based upon earliest availability to produce lower-level earliest-available partitions, and separately based upon latest availability to produce lower-level latest-available partitions,
wherein the lower-level component partitioner (510) is configured to identify order flexibility for each lower-level component based upon membership in both lower-level earliest-available and latest-available partitions, and determine an instance in which each partition in both the lower-level earliest-available and latest-available partitions contains only one order-inflexible lower-level component, the lower-level components thereby being total-ordered.

6. The process-planning system (100) of Claim 5, wherein the segment-level total-ordering module (402) further includes:
a consistency checker (512) coupled to the lower-level component partitioner (510) and configured to perform a consistency check of a level of content detail of lower-level components across a number of bordering lower-level partitions, and in an instance in which the consistency check fails, merge lower-level components with overly-specific content detail into other lower-level components of the same segment component, or revise lower-level components of the same segment component to add more specific characterization to the content detail of the respective lower-level components.

7. The process-planning system (100) of Claim 4, wherein the process for production of an aircraft includes lower-level components at one or more lower levels of the hierarchy including a lowest level, the lower-level components at the lowest level being lowest-level components at least some of which have precedence relationships across parent components at a parent level of the hierarchy,
wherein the lower-level total ordering module (404) is configured to determine an instance in which the lowest-level components are not total-ordered, but the parent components are total-ordered,
wherein the total-ordering system (400) further comprises a lowest-level total ordering module (406) configured to confirm total-order of the process for production of an aircraft through its lowest level, or adjust content of the lowest-level components to satisfy total-order and optionally,
wherein the lowest-level total ordering module (406) includes:
an assessor (520) configured to identify disjoint partitions of lowest-level components containing multiple lowest-level, order-inflexible components, and define input/output threads of the lowest-level, order-inflexible components across a number of preceding and/or succeeding partition boundaries,
wherein the assessor (520) is configured to determine an instance in which only one of the lowest-level, order-inflexible components in its partition has only corresponding lowest-level, order-inflexible components in its input/output thread, the lowest-level components of the process for production of an aircraft thereby being total-ordered.

8. A method for establishing total-ordering of internal products of a manufacturing process for production of an aircraft to enable efficient execution of the process, the method comprising:
receiving manufacturing process-related information describing a hierarchical process for production of an aircraft, the process including two or more internal products corresponding to subassemblies of the aircraft producible by one or more tasks, each task referring to an activity or set of activities performed during manufacture of the internal product, and having precedence relationships indicating that a particular task should be completed before another task is performed, the two or more internal products being segments, each of at least some of the segments including two or more segment components corresponding to parts of the subassemblies of the aircraft at least some of which have precedence relationships across segments; and
determining an instance in which the segment components are total-ordered, including:
determining an instance in which the segments of the process for production of an aircraft are total-ordered,
partitioning the segments into sets of concurrent nodes,
determining the number of segments in each set of concurrent nodes,
determining whether each set of concurrent nodes contains only one segment or more than one segment, wherein the segments of the process for production of an aircraft may be considered total-ordered in an instance in which each set of concurrent nodes contains only one segment,
assimilating or otherwise merging segments in the same set of concurrent nodes into a single segment in an instance in which a set of concurrent nodes contains more than one segment,
merging segments with membership in more than one set of concurrent nodes into a segment that has membership in the same, earliest possible set of concurrent nodes; and for the total-ordered segments,
partitioning the segment components by disjoint collections based upon earliest availability to produce earliest-available partitions, and separately based upon latest availability to produce latest-available partitions; and
identifying order flexibility for each segment component based upon membership in both earliest-available and latest-available partitions, and determining an instance in which each partition in both the earliest-available and latest-available partitions contains only one order-inflexible segment component, the segment components thereby being total-ordered.

9. The method of Claim 8, wherein determining the instance in which the segment components are total-ordered further includes:
performing a consistency check of a level of content detail of segment components across a number of bordering partitions, and in an instance in which the consistency check fails, merging segment components with overly-specific content detail into other segment components of the same segment, or revising segment components of the same segment to add more specific characterization to the content detail of the respective segment components.

10. The method of Claim 8 further comprising:
receiving further process-related information describing the process for production of an aircraft in which each of at least some of the segment components include two or more lower-level components at least some of which have precedence relationships across segment components; and
determining an instance in which the lower-level components are total-ordered.

11. The method of Claim 10, wherein determining the instance in which the lower-level components are total-ordered includes:
partitioning the lower-level components by disjoint collections based upon earliest availability to produce lower-level earliest-available partitions, and separately based upon latest availability to produce lower-level latest-available partitions; and
identifying order flexibility for each lower-level component based upon membership in both lower-level earliest-available and latest-available partitions, and determining an instance in which each partition in both the lower-level earliest-available and latest-available partitions contains only one order-inflexible lower-level component, the lower-level components thereby being total-ordered.

12. The method of Claim 11, wherein determining the instance in which the lower-level components are total-ordered further includes:
performing a consistency check of a level of content detail of lower-level components across a number of bordering lower-level partitions, and in an instance in which the consistency check fails, merging lower-level components with overly-specific content detail into other lower-level components of the same segment component, or revising lower-level components of the same segment component to add more specific characterization to the content detail of the respective lower-level components.

13. The method of Claim 10, wherein the process for production of an aircraft includes lower-level components at one or more lower levels of the hierarchy including a lowest level, the lower-level components at the lowest level being lowest-level components at least some of which have precedence relationships across parent components at a parent level of the hierarchy, and wherein the method further includes:
determining an instance in which the lowest-level components are not total-ordered, but the parent components are total-ordered; and
confirming total-order of the process for production of an aircraft through its lowest level, or adjusting content of the lowest-level components to satisfy total-order.

14. The method of Claim 13, wherein confirming total-order of the process for production of an aircraft through its lowest level includes:
identifying disjoint partitions of lowest-level components containing multiple lowest-level, order-inflexible components, and defining input/output threads of the lowest-level, order-inflexible components across a number of preceding and/or succeeding partition boundaries; and
determining an instance in which only one of the lowest-level, order-inflexible components in its partition has only corresponding lowest-level, order-inflexible components in its input/output thread, the lowest-level components of the process for production of an aircraft thereby being total-ordered.

15. A computer-readable storage medium having computer-readable program code portions stored therein that, in response to execution by a processor, cause an apparatus configured to establish total-ordering of internal products of a manufacturing process for production of an aircraft to enable efficient execution of the process to at least:
receive manufacturing process-related information describing a hierarchical process for production of an aircraft, the process including two or more internal products corresponding to subassemblies of the aircraft producible by one or more tasks, each task referring to an activity or set of activities performed during manufacture of the internal product, and having precedence relationships indicating that a particular task should be completed before another task is performed, the two or more internal products being segments, each of at least some of the segments including two or more segment components corresponding to parts of the subassemblies of the aircraft at least some of which have precedence relationships across segments; and
determine an instance in which the segment components are total-ordered, including the apparatus being caused to:
determine an instance in which the segments of the process for production of an aircraft are total-ordered; and for the total-ordered segments,
partition the segments into sets of concurrent nodes,
determine the number of segments in each set of concurrent nodes,
determine whether each set of concurrent nodes contains only one segment or more than one segment, wherein the segments of the process for production of an aircraft may be considered total-ordered in an instance in which each set of concurrent nodes contains only one segment,
assimilate or otherwise merge segments in the same set of concurrent nodes into a single segment in an instance in which a set of concurrent nodes contains more than one segment,
merge segments with membership in more than one set of concurrent nodes into a segment that has membership in the same, earliest possible set of concurrent nodes,
partition the segment components by disjoint collections based upon earliest availability to produce earliest-available partitions, and separately based upon latest availability to produce latest-available partitions; and
identify order flexibility for each segment component based upon membership in both earliest-available and latest-available partitions, and determine an instance in which each partition in both the earliest-available and latest-available partitions contains only one order-inflexible segment component, the segment components thereby being total-ordered.
